(19) Europäisches Patentamt
European Patent Office
Office européen des brevets

(11) EP 2 798 397 B1

(12) **EUROPÄISCHE PATENTSCHRIFT**

(45) Veröffentlichungstag und Bekanntmachung des Hinweises auf die Patenterteilung:
**13.07.2016 Patentblatt 2016/28**

(21) Anmeldenummer: **12794206.8**

(22) Anmeldetag: **29.11.2012**

(51) Int Cl.:
***G02F 1/01*** *(2006.01)* ***G02F 1/1335*** *(2006.01)*
***G02F 1/13*** *(2006.01)*

(86) Internationale Anmeldenummer:
**PCT/EP2012/004922**

(87) Internationale Veröffentlichungsnummer:
**WO 2013/097919 (04.07.2013 Gazette 2013/27)**

(54) **VORRICHTUNG ZUR TEMPERATURABHÄNGIGEN REGULIERUNG DES ENERGIE-DURCHTRITTS DURCH EINE LICHTDURCHLÄSSIGE FLÄCHE**

DEVICE FOR TEMPERATURE-DEPENDENT REGULATION OF THE PASSAGE OF ENERGY THROUGH A LIGHT-PERMEABLE SURFACE

DISPOSITIF DE RÉGULATION EN FONCTION DE LA TEMPÉRATURE DU PASSAGE D’ÉNERGIE À TRAVERS UNE SURFACE TRANSPARENTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.12.2011 EP 11010216**

(43) Veröffentlichungstag der Anmeldung:
**05.11.2014 Patentblatt 2014/45**

(73) Patentinhaber: **Merck Patent GmbH**
**64293 Darmstadt (DE)**

(72) Erfinder:
- **JUNGE, Michael**
**64319 Pfungstadt (DE)**
- **BEYER, Andreas**
**63452 Hanau (DE)**

(56) Entgegenhaltungen:
**WO-A1-2011/154077 US-A1- 2009 167 971**

EP 2 798 397 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die vorliegende Erfindung betrifft eine Vorrichtung zur Regulierung des Energiedurchtritts durch eine lichtdurchlässige Fläche, enthaltend eine erste Polarisationsschicht, eine zweite Polarisationsschicht und eine Schaltschicht, welche zwischen den beiden Polarisationsschichten angeordnet ist und die Polarisationseigenschaften von polarisiertem Licht temperaturabhängig ändert, wobei die beiden Polarisationsschichten durch geeignete Auswahl ihrer Transmission in Durchlassrichtung und ihres Polarisationsgrads gekennzeichnet sind. Die Erfindung betrifft weiterhin ein Verfahren zur Herstellung der erfindungsgemäßen Vorrichtung sowie die Verwendung der Vorrichtung zur temperaturabhängigen Beeinflussung der Lichttransmission und/oder des Energie-Durchtritts in einen Innenraum.

Die Energieeffizienz von Gebäuden gewinnt mit steigenden Energiekosten an Bedeutung. Fenster und Glasfassaden stellen kritische Gebäudeteile dar, durch die der Großteil an Wärmeenergie eines Gebäudes bei niedrigen Außentemperaturen verloren geht, bzw. durch die der Großteil des Energie-Eintrags in ein Gebäude bei intensiver Sonneneinstrahlung stattfindet.

Es besteht daher Bedarf an Vorrichtungen, welche den Lichtdurchtritt und damit den Energiefluss durch Fenster bzw. Glasflächen kontrollieren. Insbesondere besteht Bedarf an Vorrichtungen, welche den Energiefluss durch Glasflächen an die zum jeweiligen Zeitpunkt vorherrschenden Bedingungen (Hitze, Kälte, hohe Sonneneinstrahlung, niedrige Sonneneinstrahlung) anpassen können.

Unter dem Begriff Licht wird im Rahmen der vorliegenden Erfindung elektromagnetische Strahlung im UV-A-, VIS-, sowie NIR-Bereich verstanden. Insbesondere wird darunter Strahlung verstanden, welche von den üblicherweise in Fenstern verwendeten Materialien (z. B. Glas) nicht oder nur in einem vernachlässigbaren Umfang absorbiert wird. Gemäß den üblicherweise auf dem Gebiet der Strahlungsphysik verwendeten Definitionen wird unter UV-A-Licht Strahlung einer Wellenlänge von 320 bis 380 nm verstanden, unter VIS-Licht Strahlung einer Wellenlänge von 380 nm bis 780 nm verstanden und unter NIR-Licht Strahlung einer Wellenlänge von 780 nm bis 3000 nm verstanden. Unter dem Begriff Licht wird im Rahmen der vorliegenden Erfindung daher Strahlung einer Wellenlänge von 320 bis 3000 nm verstanden.

E ist in der kalten Jahreszeit erwünscht, dass ein Maximum an Licht und damit transportierter Energie durch Glasflächen in ein Gebäude gelangt. Dadurch können Heiz- und Beleuchtungskosten eingespart werden.

Andererseits ist es in der warmen Jahreszeit erwünscht, dass ein möglichst geringer Energie-Eintrag durch Glasflächen in ein Gebäude erfolgt. Dadurch kann ein angenehmeres Raumklima erreicht werden, bzw. es können Kosten für die Klimatisierung eingespart werden. Weiterhin kann in diesen Fällen eine Herabsetzung der einfallenden Lichtintensität erwünscht sein, beispielsweise um Blendung durch direkte Sonneneinstrahlung zu verringern.

Es besteht daher Bedarf an Schaltelementen, welche den Energie-Eintrag in Form von Licht in Innenräume, beispielsweise durch Fenster oder sonstige Glasflächen, regulieren. Insbesondere besteht Bedarf an Schaltelementen, welche die Regulation des Lichtdurchtritts automatisch an die vorherrschenden Bedingungen, wie oben dargestellt, anpassen (smart windows). Weiterhin besteht Bedarf an Schaltelementen, welche energieeffizient arbeiten, mit möglichst geringem technischen Aufwand installierbar sind, technisch zuverlässig sind und ästhetischen Ansprüchen genügen. Weitere Aspekte sind eine leichte Verarbeitbarkeit des Schaltelements, Robustheit im Betrieb und Nachrüstbarkeit an bestehenden Glasflächen von Gebäuden.

In US 2009/0015902 und US 2009/0167971 werden Temperatur-reaktive Vorrichtungen offenbart, die ein flüssigkristallines Medium in einer Schicht zwischen zwei hocheffizienten Polarisatoren enthalten. Dabei wird das Schalten zwischen einem Zustand mit höherer Lichttransmission und einem Zustand mit geringerer Lichttransmission durch einen Phasenübergang des flüssigkristallinen Mediums von einem nematischen Zustand zu einem isotropen Zustand erreicht, ohne dass das Anlegen einer Spannung notwendig wird.

US 2009/0167971 offenbart die Merkmale des Kennzeichens von Anspruch 1.

Solche Vorrichtungen weisen jedoch den Nachteil auf, dass sie eine Lichttransmission im Zustand mit höherer Lichttransmission von theoretisch maximal 50 %, praktisch von höchstens 30 bis 40 % aufweisen. Weiterhin ist die Transmission im Zustand mit geringerer Lichttransmission nahezu gleich Null, die Vorrichtung dunkelt also vollständig ab.

Für die Verwendung der Vorrichtungen in der Praxis, beispielsweise in Gebäuden oder in Fahrzeugen, wäre es jedoch wünschenswert, dass diese ein Transmission im Zustand mit höherer Lichttransmission (= offener Zustand) von 50 bis 70 % aufweisen. Andernfalls bestünde im offenen Zustand der Vorrichtung ein Eindruck von deutlicher Abdunkelung des Fensters.

Weiterhin ist es für die Praxis wünschenswert, dass die Vorrichtung im Zustand mit geringerer Transmission (= geschlossener Zustand) nicht völlig dunkel ist, sondern eine Resttransmission aufweist. Als subjektiv noch angenehm gilt bei Fenstern eine Mindest-Transmission von 7 %.

In US 2011/0102878 wird offenbart, dass in den Vorrichtungen gemäß US 2009/0015902 und US 2009/0167971 dünnere Polarisatoren mit erhöhter Transmissivität anstelle von hocheffizienten Polarisatoren verwendet werden können. Dies hat iaut der Offenbarung der genannten Anmeldung den Effekt, dass die Transmission im offenen Zustand der Vorrichtung erhöht wird. Der Schalthub der Vorrichtung, das heißt der Unterschied in der Lichttransmission zwischen

dem offenen und dem geschlossenen Zustand, wird durch eine solche Ausführungsform jedoch geringer.

Es ist wünschenswert, bei Vorrichtungen zur Regulation des Energie-Durchtritts sowohl die Transmission im hellen Zustand als auch den Schalthub der Vorrichtung nach Bedarf vorbestimmen zu können. Beispielsweise kann es für bestimmte Anwendungen vorteilhaft sein, dass die Vorrichtung einen sehr hohen Schalthub aufweist. Für andere Anwendungen kann es vorteilhaft sein, einen relativ hohen Schalthub mit einer relativ hohen Lichttransmission zu kombinieren.

Erfindungsgemäß wurde gefunden, dass dies durch geeignete Auswahl der Parameter P (Polarisationsgrad) und T1 (Transmission in Durchlassrichtung) der Polarisatoren erreicht werden kann.

In US 2009/167971 A1 ist eine Vorrichtung zur Regulierung des Energie-Durchtritts durch eine lichtdurchlässige Fläche offenbart, welche zwei Polarisationsschichten und eine dazwischen angeordnete Schaltschicht enthält, die die Polarisationseigenschaften von polarisiertem Licht temperaturabhängig ändert.

Gegenstand der Erfindung ist somit eine Vorrichtung zur Regulierung des Energie-Durchtritts durch eine lichtdurchlässige Fläche, wobei die Vorrichtung die folgenden Schichten enthält:

- eine erste Polarisationsschicht,
- eine zweite Polarisationsschicht, und
- eine zwischen den beiden Polarisationsschichten angeordnete Schaltschicht, welche die Polarisationseigenschaften von polarisiertem Licht temperaturabhängig ändert,

wobei die beiden Polarisationsschichten gleich oder verschieden einen Polarisationsgrad P im Bereich von 20 - 85 % und eine Transmission in Durchlassrichtung T1 im Bereich von 70 - 100 %, bestimmt bei einer Wellenlänge von 550 nm, aufweisen, und wobei eine oder beide der Polarisationsschichten aus einer Schicht enthaltend ein flüssigkristallines Medium sowie einen oder mehrere dichroitische Farbstoffe gebildet sind.

Durch die Verwendung von Polarisationsschichten, welche die sowohl die genannten Polarisationsgrade P als auch die genannten Transmissionen in Durchlassrichtung T1 aufweisen, werden Vorrichtungen erhalten, welche eine zufriedenstellende Dunkeltransmission von mindestens 7.5 % aufweisen. Es liegt weiterhin eine zufriedenstellende Helltransmission von mindestens 30 % vor, bevorzugt von mindestens 40 %. Es liegt weiterhin ein Schalthub von mindestens 5 % vor, bevorzugt von mindestens 7.5 %.

Weiterhin lassen sich durch geeignete Wahl beider Parameter P und T1 aus den genannten Bereichen Vorrichtungen herstellen, bei denen die Werte für die Helltransmission und den Schalthub unabhängig voneinander eingestellt werden können.

Die Parameter P und T1 sind, wie dem Fachmann auf dem Gebiet der Vorrichtungen enthaltend Polarisationsschichten allgemein bekannt ist, wie folgt definiert:

P ist durch die Gleichung

$$P = (T1-T2) / (T1+T2)$$

aus den Werten für T1 und T2 erhältlich. T1 stellt die Transmission des Polarisators in Durchlassrichtung bei einer Wellenlänge von 550 nm dar. Unter der Durchlassrichtung wird diejenige Orientierung von eingestrahltem polarisierten Licht verstanden, bei der die höchste Transmission durch den Polarisator auftritt. T2 stellt die Transmission des Polarisators in Sperrrichtung bei einer Wellenlänge von 550 nm dar. Unter der Sperrrichtung wird diejenige Orientierung von eingestrahltem polarisierten Licht verstanden, bei der die geringste Transmission durch den Polarisator auftritt.

Unter der Helltransmission der Vorrichtung, wie oben angegeben, wird die Transmission durch die Vorrichtung verstanden, welche im Schaltzustand mit höherer Lichtdurchlässigkeit auftritt. Entsprechend wird unter der Dunkeltransmission der Vorrichtung diejenige Transmission durch die Vorrichtung verstanden, welche im Schaltzustand mit geringerer Lichttransmission auftritt. Die Transmissionen sind erneut für 550 nm Wellenlänge des Lichts definiert.

Schließlich wird unter dem Schalthub der Vorrichtung die Differenz zwischen den Werten für die Helltransmission und die Dunkeltransmission verstanden.

Es wird angemerkt, dass in der vorliegenden Anmeldung die optischen Werte T1, T2, P sowie die Helltransmission, die Dunkeltransmission und der Schalthub grundsätzlich für 550 nm Wellenlänge bestimmt wurden, es sei denn es ist explizit anders angegeben.

Unter dem Begriff Energie wird im Rahmen der vorliegenden Erfindung Energie von elektromagnetischer Strahlung (Lichtenergie) im UV-A-, VIS-, sowie NIR-Bereich verstanden. Insbesondere wird darunter Lichtenergie verstanden, welche von den üblicherweise in Fenstern verwendeten Materialien (z. B. Glas) nicht oder nur in einem vernachlässigbaren Umfang absorbiert wird.

Als die beiden Schaltzustände der Vorrichtung liegen erfindungsgemäß ein Schaltzustand mit höherer Lichttransmission durch die Vorrichtung (Hellzustand) und ein Schaltzustand mit geringerer Lichttransmission durch die Vorrichtung (Dunkelzustand) vor.

Hohe Lichttransmission durch die Vorrichtung führt aufgrund von allgemein bekannten physikalischen Gesetzen zu einem hohen Energie-Eintrag in den Innenraum, welcher die Vorrichtung auf einer lichtdurchlässigen Fläche aufgebracht aufweist. Geringe Lichttransmission durch die Vorrichtung führt entsprechend zu einem geringen Energie-Eintrag in den Innenraum. Durch die Schaltung ihrer Lichtdurchlässigkeit reguliert die Vorrichtung daher den Energie-Eintrag in den Innenraum.

Die Vorrichtung schaltet temperaturabhängig von einem Schaltzustand mit höherer Lichtdurchlässigkeit zu einem Schaltzustand mit geringerer Lichtdurchlässigkeit. Die Schaltzustände der Vorrichtung sind folglich mit unterschiedlichen Temperaturbereichen der Vorrichtung verbunden. Das Schalten der Vorrichtung findet bevorzugt graduell in einem Temperaturbereich zwischen 0 °C und 80 °C, bevorzugt zwischen 10 °C und 70 °C und ganz besonders bevorzugt zwischen 20 °C und 60 °C statt.

Gemäß einer bevorzugten Ausführungsform der Erfindung liegt der Schaltzustand mit höherer Lichttransmission bei relativ gesehen niedrigeren Temperaturen der Vorrichtung vor, und der Schaltzustand mit geringerer Lichttransmission liegt bei relativ gesehen höheren Temperaturen der Vorrichtung vor. Entsprechend tritt der Hellzustand der Vorrichtung bevorzugt bei Temperaturen unterhalb von 0 °C, besonders bevorzugt unterhalb von 10 °C und ganz besonders bevorzugt unterhalb von 20 °C auf. Der Dunkelzustand der Vorrichtung tritt bevorzugt bei Temperaturen oberhalb von 80 °C, besonders bevorzugt oberhalb von 70 °C und ganz besonders bevorzugt oberhalb von 60 °C auf.

Die Funktionsweise der Vorrichtung beruht darauf, dass einfallendes Licht durch die erste Polarisationsschicht polarisiert wird. Dies bedeutet, dass überwiegend Licht mit bestimmten Polarisationseigenschaften hindurchgelassen wird. Hinter der ersten Polarisationsschicht ist die Schaltschicht angeordnet. Diese lässt in einem ersten Zustand die Polarisationseigenschaften des Lichts, das durch sie hindurchtritt, unbeeinflusst. Das Licht trifft anschließend auf die zweite Polarisationsschicht, die hinter der Schaltschicht angeordnet ist. Entsprechend der Anordnung der Durchlassrichtungen der Polarisationsschichten zueinander kann nun ein bestimmter Anteil des Lichts auch durch die zweite Polarisationsschicht hindurchgelangen. Im anderen der beiden Schaltzustände verändert die polarisationsbeeinflussende Schaltschicht die Polarisationseigenschaften des Lichts, das durch sie hindurchtritt. Dadurch kann nun ein höherer oder ein niedrigerer Anteil des polarisierten Lichts durch den zweiten Polarisator hindurchtreten, je nachdem in welcher Weise die Polarisationseigenschaften des Lichts durch die Schaltschicht verändert worden sind. In jedem Fall ergibt sich durch die Veränderung der Polarisationseigenschaften des Lichts durch die Schaltschicht in ihrem zweiten Zustand eine Änderung der Lichttransmission der Vorrichtung gegenüber dem ersten Zustand der Schaltschicht, in dem diese die Polarisationseigenschaften des Lichts nicht beeinfiusst.

Gemäß einer bevorzugten Ausführungsform der Erfindung sind die beiden Polarisationsschichten lineare Polarisatoren, deren Vorzugsrichtungen der Polarisation um einen Winkel von 60-120°, bevorzugt 75-105° und besonders bevorzugt 80 bis 100° gegeneinander gedreht sind. Die Schaltschicht dreht in einem der beiden Zustände die Polarisationsebene des Lichts nicht oder nur geringfügig. Im anderen der beiden Zustände dreht sie die Polarisationsebene des Lichts um einen Winkel, welcher dem Winkel entspricht, in dem die Vorzugsrichtungen der Polarisation der Polarisatoren gegeneinander gedreht sind, oder von diesem Winkel nur geringfügig, beispielsweise um 1-10°, abweicht. In dieser Konfiguration gelangt das Licht, welches durch den ersten Polarisator durchtritt, auch durch den zweiten Polarisator hindurch, wenn die Schaltschicht im Zustand vorliegt, in dem sie die Polarisationsebene des Lichts dreht. Der aktive Zustand der Schaltschicht entspricht also dem Hellzustand der Vorrichtung. Wenn die Schaltschicht hingegen in ihrem inaktiven Zustand vorliegt, d. h. dem Zustand, in dem sie die Polarisationsebene des Lichts nicht dreht, kann das Licht, welches auf den zweiten Polarisator trifft, durch diesen nicht hindurchtreten, da die Vorzugsrichtungen der Polarisation der beiden Polarisatoren gegeneinander verdreht sind. Der inaktive Zustand der Schaltschicht entspricht in dieser Ausführungsform daher dem Dunkelzustand der Vorrichtung.

Der aktive Zustand der Schaltschicht ist mit einem optisch anisotropen Zustand, bevorzugt einem flüssigkristallinen Zustand der Schaltschicht verbunden, und der inaktive Zustand der Schaltschicht ist mit einem weitgehend isotropen Zustand der Schaltschicht verbunden.

Bevorzugt dreht die Schaltschicht im optisch anisotropen Zustand die Polarisationsebene von linear polarisiertem Licht um einen Winkel von 10° oder mehr, während sie im isotropen Zustand die Polarisationsebene von linear polarisiertem Licht nicht oder nur in vernachlässigbarem Umfang dreht. Besonders bevorzugt dreht sie die Polarisationsebene von linear polarisiertem Licht um einen Winkel von mehr als 40°, ganz besonders bevorzugt um einen Winkel von mehr als 70°. Am stärksten bevorzugt sind Drehungswinkel von 70 bis 110°, noch stärker Winkel von 80 bis 100°. Es sind jedoch auch Drehwinkel möglich, welche um Vielfache von 180° größer sind als die angegebenen bevorzugten Drehwinkel.

Erfindungsgemäß verläuft der Schaltvorgang zwischen den beiden Schaltzuständen nicht abrupt bei einer bestimmten Temperatur, sondern graduell in einem Übergangsbereich, welcher in einer Temperaturspanne liegt. Diese Temperaturspanne des Übergangsbereichs weist bevorzugt eine Breite von 5 bis 100 Graden Celsius auf, verläuft also

beispielweise zwischen 15 und 110 °C. Besonders bevorzugt weist die Temperaturspanne eine Breite von 10 bis 50 Graden Celsius auf. Innerhalb der Temperaturspanne des Übergangsbereichs ändert sich die Transmission der Vorrichtung graduell über Zwischenwerte der Transmission vom Wert für die Helltransmission zum Wert für die Dunkeltransmission der Vorrichtung.

Die Vorrichtung schaltet bevorzugt ausschließlich temperaturgesteuert. Somit enthält sie bevorzugt keine Vorrichtungen zur elektrischen Ansteuerung des Schaltvorgangs. Besonders bevorzugt enthält sie keine Drähte, Kabel, elektrische Anschlüsse oder Schaltkreise. Weiterhin bevorzugt wird sie nicht von außen elektrisch angesteuert oder mit Strom versorgt, stellt also ein für sich autonomes System dar.

Bevorzugt erfolgt der Energie-Durchtritt durch eine lichtdurchlässige Fläche in einen Innenraum hinein. Der Innenraum ist bevorzugt der Innenraum eines Gebäudes, beispielsweise eine Wohngebäudes, eines Bürogebäudes, oder eines gewerblich genutzten Gebäudes. Alternativ kann der Innenraum auch der Innenraum eines Fahrzeugs, beispielsweise eines Autos, oder der Innenraum eines Transportbehälters, beispielsweise eines Containers sein. Die Vorrichtung kann erfindungsgemäß für beliebige Innenräume verwendet werden, sofern diese nur begrenzten Luftaustausch mit der Umgebung aufweisen und lichtdurchlässige Begrenzungsflächen aufweisen, durch die Energie-Eintrag von außen in Form von Lichtenergie stattfinden kann. Besonders relevant ist die Erfindung für Innenräume, welche starker Sonneneinstrahlung durch lichtdurchlässige Flächen, beispielsweise durch Fensterflächen, ausgesetzt sind.

Bevorzugt sind lichtdurchlässige Flächen wie Fenster oder Decken einer Größe von mehr als 0.5 $m^2$, besonders bevorzugt mehr als 1 $m^2$, ganz besonders bevorzugt mehr als 3 $m^2$. Dies ist dadurch bedingt, dass durch solche Flächen, wenn sie von der Sonne bestrahlt werden, eine hohe Energieaufnahme in den Innenraum erfolgen kann. Bevorzugt sind weiterhin lichtdurchlässige Flächen, die aufgrund ihrer räumlichen Ausrichtung und/oder der geographischen und klimatischen Lage des Gebäudes einer hohen Sonneneinstrahlung ausgesetzt sind.

Die Vorrichtung ist bevorzugt flächendeckend auf lichtdurchlässigen Fläche angeordnet, so dass die Lichttransmission durch die Fläche möglichst vollständig reguliert werden kann. In einer möglichen Ausführungsform erfolgt die Abdeckung durch eine einzige Vorrichtung. In einer alternativen Ausführungsform kann die Abdeckung aber auch durch mehrere Vorrichtungen erfolgen, die entweder unmittelbar aneinander angrenzen oder so angeordnet sind, dass Zwischenräume verbleiben.

In einer bevorzugten Ausführungsform stellt die lichtdurchlässige Fläche eine Glasscheibe oder eine Plexiglasscheibe dar. Bei Fensterscheiben ist Mehrscheiben-Isolierglas bevorzugt. Gemäß einer bevorzugten Ausführungsform wird die erfindungsgemäße Vorrichtung direkt auf dieser Scheibe aufgebracht.

Eine solche Aufbringung kann durch Nachrüsten einer bereits bestehenden Anordnung oder durch kompletten Neueinbau erfolgen.

Gemäß einer bevorzugten Ausführungsform ist die Vorrichtung im Inneren von Mehrscheiben-Isolierglas angebracht oder außen an einem solchen Glas angebracht. Allgemein bevorzugt ist die Verwendung auf einer zum Innenraum hin gerichteten Seite einer Scheibe oder im Zwischenraum zwischen zwei Glasscheiben bei Mehrscheiben-Isolierglas. Es sind jedoch auch andere Anordnungen denkbar und in bestimmten Fällen vorzuziehen. Der Fachmann kann Vor- und Nachteile bestimmter Anordnungen bezüglich der Haltbarkeit der Vorrichtung, optischen und ästhetischen Gesichtspunkten, praktischen Gesichtspunkten bezüglich der Reinigung der Scheiben sowie bezüglich der Reaktivität der Vorrichtung gegenüber Temperaturänderungen gegeneinander abwägen und eine für den vorliegenden Fall optimale Ausgestaltungsform auswählen.

Gemäß einer bevorzugten Ausführungsform ist die Vorrichtung dadurch gekennzeichnet, dass sie eine Flächenausdehnung von mindestens 0.05 $m^2$, bevorzugt von 0.1 $m^2$ bis 20 $m^2$ und besonders bevorzugt von 0.2 $m^2$ bis 5 $m^2$ aufweist.

Es ist erfindungsgemäß bevorzugt, dass die Polarisationsschichten der Vorrichtung gleich oder verschieden einen Polarisationsgrad P im Bereich von 30 - 85 % und eine Transmission in Durchlassrichtung T1 im Bereich von 75 bis 100 % aufweisen, wobei die Werte bei einer Wellenlänge von 550 nm bestimmt sind. Besonders bevorzugt ist für die Polarisationsschichten ein Polarisationsgrad P im Bereich von 35 bis 80 % und eine Transmission T1 im Bereich von 75 bis 100 %.

Innerhalb der erfindungsgemäßen Bereiche für P und T1 wurden bestimmte Kombinationen von Wertebereichen für P und T1 gefunden, für die bestimmte Eigenschaften der charakteristischen Parameter der Vorrichtung Helltransmission und Schalthub auftreten. Dabei bleibt die Dunkeltransmission über dem Mindestwert von 7 %.

Eine Vorrichtung mit möglichst hohem Schalthub wird erhalten, wenn P für die Polarisatoren gleich oder verschieden aus dem Bereich von 45 - 85 % und T1 aus dem Bereich von 75 - 100 % gewählt wird. Bevorzugt ist P gewählt aus dem Bereich von 55 - 85 % und T1 aus dem Bereich von 80 - 100 %. Ganz besonders bevorzugt ist P gewählt aus dem Bereich von 65 - 85 % und T1 aus dem Bereich von 85 - 100 %.

Dabei werden die oben genannten Mindestwerte für die Helltransmission und die Dunkeltransmission eingehalten.

Eine Vorrichtung mit mäßig hohem Schalthub kombiniert mit mäßig hoher Helltransmission wird erhalten, wenn P für die Polarisatoren gleich oder verschieden aus dem Bereich von 30 bis 85 % und T1 aus dem Bereich von 80 bis

100 % gewählt wird. Bevorzugt wird P gewählt aus dem Bereich von 40 bis 75 % und T1 aus dem Bereich von 90 bis 100 %. Dabei werden die oben genannten Mindestwerte für die Dunkeltransmission eingehalten.

Eine Vorrichtung mit möglichst hoher Helltransmission wird erhalten, wenn P für die Polarisatoren gleich oder verschieden aus dem Bereich von 25 bis 60 % und T1 aus dem Bereich von 90 bis 100 % gewählt wird. Bevorzugt wird P gewählt aus dem Bereich von 30 bis 40 % und T1 aus dem Bereich von 95 bis 100 %. Dabei werden die oben genannten Mindestwerte für die Dunkeltransmission und den Schalthub eingehalten.

Die Werte für P und T1 können für die Polarisationsschichten unabhängig voneinander eingestellt werden. Verfahren hierfür sind dem Fachmann bekannt. Dazu zählen beispielsweise die Änderung der Schichtdicke der Polarisationsschicht, die Änderung des Orientierungsgrades der Polarisationsschicht und die Änderung der Konzentration der lichtabsorbierenden Spezies in der Polarisationsschicht.

Bei Polarisatoren enthaltend ein flüssigkristallines Medium und einen dichroitischen Farbstoff können beispielsweise durch Änderung des flüssigkristallinen Mediums und Änderung der Konzentration des dichroitischen Farbstoffs die Parameter P und T1 unabhängig voneinander variiert werden. Hierzu sind in einem folgenden Abschnitt explizite Ausführungsbeispiele gegeben.

In vielen Fällen wird es erforderlich sein, eine größere Anzahl verschiedener Polarisatoren unter Variation der oben angegebenen Herstellungsparameter herzustellen und deren Werte P und T1 zu messen. Daraus lässt sich ein empirischer Zusammenhang zwischen Herstellungsparameter (z. B. Verstreckungsgrad und Konzentration an Farbstoff) und Wertepaaren T1 und P erkennen, auf dessen Basis der Fachmann Polarisatoren mit beliebigen Werten T1 und P gezielt herstellen kann.

Gegenstand der Erfindung ist somit weiterhin ein Verfahren zur Herstellung einer Vorrichtung zur Regulierung des Energie-Durchtritts durch eine lichtdurchlässige Fläche, wobei die Vorrichtung die folgenden Schichten umfasst:

- eine erste Polarisationsschicht,
- eine zweite Polarisationsschicht,
- eine zwischen den beiden Polarisationsschichten angeordnete Schaltschicht, welche die Polarisationseigenschaften von polarisiertem Licht temperaturabhängig ändert,

dadurch gekennzeichnet, dass die beiden Parameter Polarisationsgrad P und Transmission in Durchlassrichtung T1 für die Polarisationsschichten unabhängig voneinander ausgewählt werden durch Variation eines oder mehrerer Herstellparameter gewählt aus Schichtdicke, Orientierungsgrad der Polarisationsschicht, Konzentration von eingelagerter Substanz, Orientierungsgrad der eingelagerten Substanz, Absorptionseigenschaften der eingelagerten Substanz, Struktur der eingelagerten Substanz, Dichroismus der eingelagerten Substanz und Aggregationseigenschaften der eingelagerten Substanz.

Unter der Struktur der eingelagerten Substanz wird ihre molekulare Struktur, insbesondere ihr Länge- zu Breite-Verhältnis verstanden. Je größer das Länge- zu Breite-Verhältnis einer Substanz, desto größer ist im Allgemeinen der Orientierungsgrad.

Unter den Aggregationseigenschaften der eingelagerten Substanz wird insbesondere die Fähigkeit zur Bildung von Ketten aus Einzelmolekülen bzw. Einzelatomen der Substanz verstanden.

Bevorzugt ist bei dem Verfahren der Polarisationsgrad P ausgewählt aus dem Bereich von 20 - 85 % und die Transmission in Durchlassrichtung ausgewählt aus dem Bereich von 70 - 100 %. Besonders bevorzugt ist P ausgewählt aus dem Bereich von 30 - 85 % und T1 ist ausgewählt aus dem Bereich von 75 bis 100 %.

Für das Verfahren sind die bevorzugten Ausführungsformen der Polarisationsschichten und der Schaltschicht, die für die erfindungsgemäße Vorrichtung angegeben werden, ebenfalls bevorzugt.

Weiterer Gegenstand der Erfindung ist die Verwendung der erfindungsgemäßen Vorrichtung zur temperaturabhängigen Beeinflussung des Energie-Durchtritts durch eine lichtdurchlässige Fläche. Bevorzugt erfolgt die Verwendung zur temperaturabhängigen Beeinflussung des Energie-Eintrags durch eine lichtdurchlässige Fläche in einen Innenraum.

Der Energie-Durchtritt wird bei der erfindungsgemäßen Verwendung dadurch beeinflusst, dass die Vorrichtung ihre Durchlässigkeit für Licht zwischen einem Schaltzustand mit höherer Lichttransmission (Hellzustand) und einem Schaltzustand mit geringerer Lichttransmission (Dunkelzustand) ändert. Der Schaltvorgang ist dabei temperaturgesteuert und erfolgt in den oben angegebenen bevorzugten Bereichen für den Schaltvorgang.

Die erfindungsgemäße Verwendung erfolgt ohne Anlegen von elektrischer Spannung. Die Verwendung benötigt folglich keine Energie, insbesondere keine elektrische Energie.

Erfindungsgemäß weist die Vorrichtung zwei oder mehr Polarisationsschichten auf, von denen eine an der einen Seite der Schaltschicht und eine andere an der gegenüberliegenden Seite der Schaltschicht angeordnet ist. Dabei sind die Schaltschicht und die beiden Polarisationsschichten bevorzugt parallel zueinander angeordnet. Die Polarisationsschichten weisen die oben als erfindungsgemäß angegebenen Werte für die Parameter P und T1 auf und weisen bevorzugt die oben als bevorzugt angegebenen Werte für die Parameter P und T1 auf.

Die Poiarisationsschichten können Linearpolarisatoren oder Zirkularpolarisatoren darstellen. Bevorzugt sind genau zwei Polarisationsschichten in der Vorrichtung vorhanden. In diesem Fall ist es weiterhin bevorzugt, dass die Polarisationsschichten entweder beide Linearpolarisatoren oder beide Zirkularpolarisatoren darstellen.

Besonders bevorzugt sind die beiden Polarisationsschichten jeweils gleich oder verschieden absorptive oder reflektive Linearpolarisatoren. Ganz besonders bevorzugt sind die beiden Polarisationsschichten absorptive Linearpolarisatoren.

Ein reflektiver Polarisator im Sinne der vorliegenden Anmeldung reflektiert Licht einer Polarisationsrichtung bzw. einer Art von circular polarisiertem Licht, während er für Licht der anderen Polarisationsrichtung bzw. der anderen Art von circular polarisiertem Licht durchlässig ist. Entsprechend absorbiert ein absorptiver Polarisator Licht einer Polarisationsrichtung bzw. einer Art von circular polarisiertem Licht, während er für Licht der anderen Polarisationsrichtung bzw. der anderen Art von circular polarisiertem Licht durchlässig ist.

Sind zwei Linearpolarisatoren in der Vorrichtung vorhanden, so ist es erfindungsgemäß bevorzugt, dass die Polarisationsebenen der beiden Polarisatoren um einen Winkel von 70° bis 110°, besonders bevorzugt 80° bis 100° und ganz besonders bevorzugt 85° bis 95° gegeneinander gedreht sind.

Erfindungsgemäß ist eine oder beide der Polarisationsschichten aus einer Schicht enthaltend ein flüssigkristallines Medium sowie einen oder mehrere dichroitische Farbstoffe gebildet. Bevorzugt enthält dabei das flüssigkristalline Medium zwei oder mehr, besonders bevorzugt 5 oder mehr, ganz besonders bevorzugt 7 oder mehr verschiedene flüssigkristalline Verbindungen.

Unter dem Begriff flüssigkristalline Verbindung wird im Rahmen der vorliegenden Anmeldung eine Verbindung verstanden, welche unter bestimmten Bedingungen flüssigkristalline Eigenschaften zeigt, und insbesondere eine Verbindung, welche unter bestimmten Bedingungen eine nematische flüssigkristalline Phase ausbildet.

Die flüssigkristallinen Verbindungen können beliebig gewählt sein aus dem Fachmann bekannten flüssigkristallinen Verbindungen. Bevorzugt sind flüssigkristalline Verbindungen mit begrenzter Größe und Molekulargewicht (kleine Moleküle). Besonders bevorzugt ist es, wenn die flüssigkristalline Verbindung ein Molekulargewicht von nicht mehr als 1000 Da, ganz besonders bevorzugt von nicht mehr als 800 Da und am stärksten bevorzugt von nicht mehr als 600 Da aufweist.

Geeignete flüssigkristalline Medien zur Verwendung in den Polarisationsschichten sind solche Medien, welche eine hohe Temperaturstabilität aufweisen und lichtstabil sind. Bevorzugt weisen sie einen Klärpunkt von mehr als 50 °C, besonders bevorzugt mehr als 70 °C und ganz besonders bevorzugt mehr als 90 °C auf.

Gemäß einer bevorzugten Ausführungsform der Erfindung enthält das flüssigkristalline Medium eine oder mehrere polymere Verbindungen. Gemäß einer bevorzugten Ausführungsform liegt das Polymer als kontinuierliche Phase in einem Polymernetzwerk vor (Polymernetzwerk-Systeme). Das Polymernetzwerk ist bevorzugt vom flüssigkristallinen Medium durchdrungen und/oder im flüssigkristallinen Medium gelöst, so dass eine optisch einheitliche Erscheinung vorliegt. Bevorzugt wird es durch Polymerisation von Mono- oder Diacrylat-Monomeren gebildet, welche dem flüssigkristallinen Medium zugefügt werden. Das flüssigkristalline Medium ist bevorzugt in einem Anteil von mehr als 60 % in der Mischung mit der polymeren Verbindung vorhanden, besonders bevorzugt 70 bis 95 %. Solche Systeme sind beispielsweise in EP 452460, EP 313053 und EP 359146 im Detail beschrieben.

Als dichroitische Farbstoffe können die in Liquid Crystals, Applications and Uses, 1992, World Scientific Publishing, Editor B. Bahadur, auf den Seiten 73-81 offenbarten Verbindungen verwendet werden. Bevorzugt sind Anthrachinon-, Naphthochinon-, Benzochinon-, Perylen- und Tetrazinfarbstoffe sowie Verbindungen enthaltend eine oder mehrere Azogruppen oder eine oder mehrere Schiff-Basen.

Die dichroitischen Farbstoffe sind bevorzugt gewählt aus den folgenden Verbindungen:

| |
|---|
| 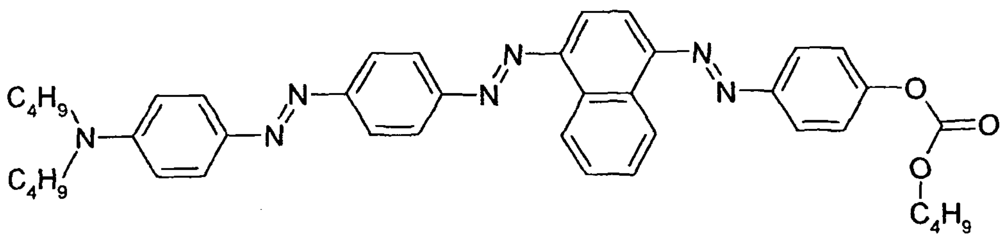 |
| 1 |

(fortgesetzt)

| |
|---|
| 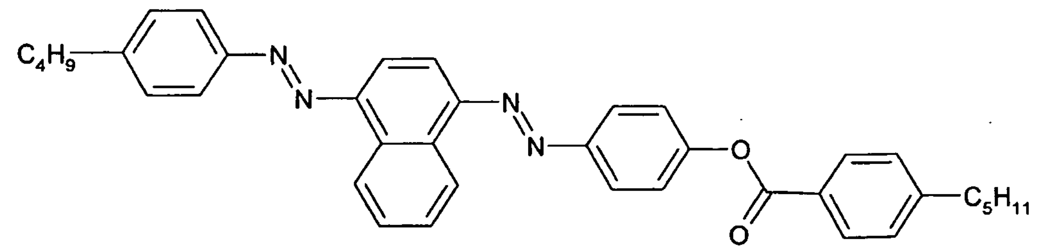 |
| 2 |
| 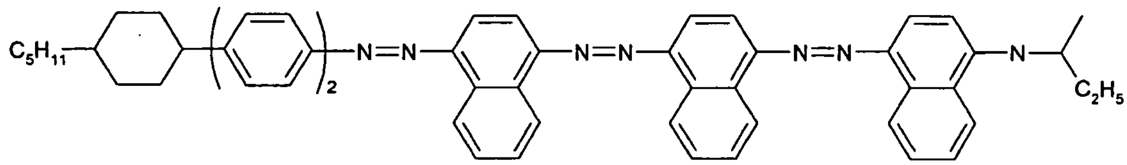 |
| 3 |
| 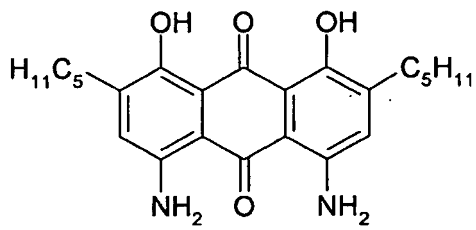 |
| 4 |

Die Farbstoffe sind bevorzugt in einer Konzentration von 0.01 Gew.-% bis 5 Gew.-%, besonders bevorzugt 0.05 Gew.-% bis 1 Gew.-% in der Mischung vorhanden. Bevorzugt sind sie im flüssigkristallinen Medium gelöst.

Weiterhin ist es bevorzugt, dass zwei oder mehr Farbstoffe zusammen verwendet werden. Besonders bevorzugt werden genau zwei oder drei Farbstoffe verwendet. Bevorzugt werden die verwendeten Farbstoffe so gewählt, dass ihre Absorptionsspektren sich zu einem neutralen, das heißt nicht farbigen Eindruck für das menschliche Auge ergänzen. Für bestimmte Ausführungsformen kann es jedoch auch bevorzugt sein, einen oder mehrere Farbstoffe zu verwenden, welche zusammen einen farbigen Eindruck bewirken.

Die Schaltschicht der erfindungsgemäßen Vorrichtung enthält bevorzugt ein flüssigkristallines Medium, welches mindestens eine flüssigkristalline Verbindung enthält. Bevorzugt liegt in der Schaltschicht eine Mischung verschiedener flüssigkristalliner Verbindungen vor. Besonders bevorzugt liegen in der Schaltschicht mindestens 5 und höchstens 15 verschiedene flüssigkristalline Verbindungen vor.

Die flüssigkristallinen Verbindungen können beliebig gewählt sein aus dem Fachmann bekannten flüssigkristallinen Verbindungen. Bevorzugt sind flüssigkristalline Verbindungen mit begrenzter Größe und Molekulargewicht (kleine Moleküle). Besonders bevorzugt ist es, wenn die flüssigkristalline Verbindung ein Molekulargewicht von nicht mehr als 1000 Da, ganz Verbindung ein Molekulargewicht von nicht mehr als 1000 Da, ganz besonders bevorzugt von nicht mehr als 800 Da und am stärksten bevorzugt von nicht mehr als 600 Da aufweist.

Bevorzugt weist die Mischung der flüssigkristallinen Verbindungen (bzw. im Fall, dass nur eine flüssigkristalline Verbindung verwendet wird, die einzelne flüssigkristalline Verbindung) einen Klärpunkt zwischen -20 °C und 200 °C auf, besonders bevorzugt einen Klärpunkt zwischen 10 °C und 180 °C.

Besonders bevorzugt sind zur Verwendung als flüssigkristalline Medien die in WO 2011/134582, WO 2011/144299, WO 2011/154077 und die in den noch nicht offengelegten Anmeldungen EP 10008779.0 und EP 10013797.5 offenbarten Mischungen von flüssigkristallinen Verbindungen.

Bevorzugt wechselt das flüssigkristalline Medium der Schaltschicht beim Schaltvorgang mit steigender Temperatur von einem nematischen zu einem isotropen Zustand. Dabei ist bevorzugt der nematische Zustand mit dem Zustand der Vorrichtung mit höherer Lichtdurchlässigkeit verbunden, und der isotrope Zustand ist mit dem Zustand der Vorrichtung mit geringerer Lichtdurchlässigkeit verbunden.

Das flüssigkristalline Medium kann weiterhin eine oder mehrere polymere Verbindungen enthalten. Insbesondere bevorzugt stellt dabei das Medium eines der flüssigkristallinen Medien enthaltend polymere Verbindungen dar,

welche in der noch nicht offengelegten Anmeldung EP 11008518.0 beschrieben werden. Für nochmals weitere Informationen zu PolymerNetzwerk-Systemen wird auf die Offenbarung der Anmeldungen EP 452460, EP 313053 und EP 359146 verwiesen.

Gemäß einer bevorzugten Ausführungsform der Erfindung umfasst die Schaltschicht eine verdrillt nematische Schicht. Die Drehung der Vorzugsrichtung der flüssigkristallinen Verbindungen wird dabei bevorzugt durch zwei oder mehr Orientierungsschichten bewirkt, von denen sich mindestens eine auf einer Seite der Schaltschicht befindet und mindestens eine auf der gegenüberliegenden Seite der Schaltschicht.

Bevorzugt umfasst die erfindungsgemäße Vorrichtung mindestens eine Substratschicht, welche bevorzugt aus Glas, einem Polymer oder ITO gebildet ist. Bevorzugt ist die Substratschicht starr.

Weiterhin kann sie zusätzlich zu den Polarisationsschichten und der Schaltschicht eine oder mehrere weitere Funktionsschichten aufweisen. Es können einzelne der unten angegebenen Arten von Funktionsschichten in der Vorrichtung vorhanden sein oder alle Arten. Die Schichten sind bevorzugt passiv, d. h. sind in ihrer Wirkung nicht änderbar.

Die weiteren Funktionsschichten sind bevorzugt gewählt aus Schutzschichten gegen Witterungseinflüsse, Beschädigung durch Einwirkung von harten Gegenständen, Alterung und UV-Licht. Dem Fachmann sind solche Schutzschichten, ihre Wirkungen und Verfahren zu Ihrer Anbringung und Verwendung bekannt.

Weitere bevorzugte Schichten sind gewählt aus Schichten, welche Licht einer bestimmten Wellenlänge blockieren oder in der Transmission verringern, beispielsweise NIR-Licht oder Licht einer bestimmten Wellenlänge (Farbe) im sichtbaren Bereich. Bevorzugt sind NIRtransmissionshindernde Schichten, beispielsweise aus cholesterischem flüssigkristallinen Material, keramischem Material, Metall oder Metalloxid.

Weitere bevorzugte Funktionsschichten sind gewählt aus dem Fachmann bekannten Orientierungsschichten für flüssigkristalline Verbindungen. Bevorzugt sind mindestens zwei Orientierungsschichten vorhanden, wobei mindestens eine Orientierungsschicht an der einen Seite der Schaltschicht und mindestens eine Orientierungsschicht an der gegenüberliegenden Seite der Schaltschicht angeordnet ist. Die Orientierungsschichten können auch als Substratschichten dienen, so dass keine Substratschichten in der Vorrichtung erforderlich sind. In einer bevorzugten Ausführungsform der Erfindung bestehen die Orientierungsschichten aus geriebenem Polyimid oder geriebenem Polyacrylat.

Die Vorrichtung besitzt bevorzugt den in Fig. 1 dargestellten Aufbau. Dabei bezeichnet (1) die Vorrichtung, (2) bezeichnet die Schaltschicht, und (3a) und (3b) bezeichnen die Polarisationsschichten. Fig. 1 beschreibt die grundlegende Anordnung der Schichten und soll beispielsweise nicht ausschließen, dass sich weitere Funktionsschichten, beispielsweise eine oder mehrere Orientierungsschichten und/oder eine oder mehrere Schutzschichten, welche äußere Einflüsse oder Licht bestimmter Wellenlänge blockieren, zwischen den gezeigten Schichten oder außerhalb der Schichtanordnung befinden.

In Fig. 2 ist ein weiterer bevorzugter Aufbau der Schichtanordnung dargestellt, bei dem sich die Anordnung enthaltend die Schaltschicht und die beiden Polarisationsschichten auf einer Substratschicht (4) befinden.

Die folgenden Ausführungsbeispiele beschreiben bevorzugte Ausführungsformen der erfindungsgemäßen Vorrichtung. Anhand der Beispiele kann der Fachmann das Funktionsprinzip der Erfindung erkennen und es auf weitere, nicht explizit beschriebene Ausführungsformen anwenden. Aus den Beispielen ist keinerlei Beschränkung der Erfindung auf das dort unmittelbar Beschriebene abzuleiten.

## Ausführungsbeispiele

### 1. Herstellung der Polarisationsschichten

Für die Herstellung der Polarisationsschichten werden die folgenden Komponenten verwendet:

LC-Mischung A:

| LC-Verbindung | % |
|---|---|
| CP-3-N | 20 |
| PZG-5-N | 10 |
| PZP-1O-1 | 11 |
| PZP-1O-5 | 16 |
| PGU-3-F | 9 |
| CPZG-3-N | 5 |
| CPZG-4-N | 5 |

(fortgesetzt)

| LC-Verbindung | % |
|---|---|
| CPZG-5-N | 5 |
| CCCZPC-3-3 | 3 |
| CCZPC-3-4 | 3 |
| CGPC-3-3 | 5 |
| CGPC-5-3 | 4 |
| CGPC-5-5 | 4 |

LC-Mischung B:

| LC-Verbindung | % |
|---|---|
| PZG-3-N | 2 |
| PZG-4-N | 9 |
| PZG-5-N | 9 |
| PZP-1-5 | 10 |
| PZP-1O-1 | 17 |
| PZP-1O-5 | 16 |
| CP-3-N | 12 |
| PP-2-N | 10 |
| PGU-3-F | 9 |
| CPZG-3-N | 3 |
| CPZG-4-N | 3 |

Farbstoffmischung:

| Farbstoff | Teile |
|---|---|
| 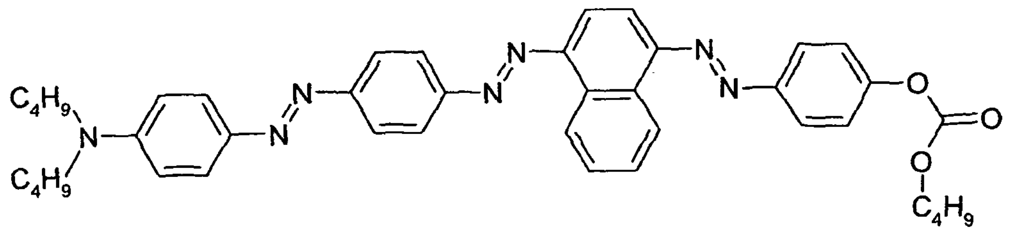 | 37 |
| 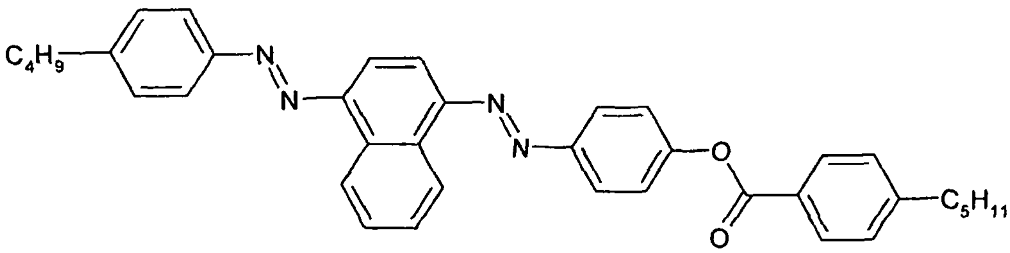 | 76 |

(fortgesetzt)

| Farbstoff | Teile |
|---|---|
| 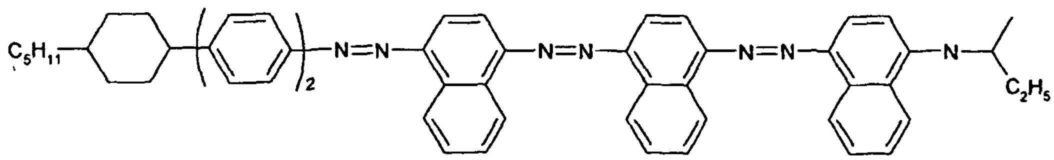 | 90 |

Aus den angegebenen Komponenten werden die folgenden Polarisationsschichten EP-1 bis EP-4 hergestellt:

| | LC-Mischung | Anteil Farbstoffmischung |
|---|---|---|
| EP-1 | A | 0.1 % |
| EP-2 | A | 0.3 % |
| EP-3 | A | 0.5 % |
| EP-4 | B | 0.3 % |

Weiterhin werden zum Vergleich die folgenden Polarisationsschichten VP-1 bis VP-3 hergestellt bzw. kommerziell erworben (VP-3):

| | LC-Mischung | Anteil Farbstoffmischung |
|---|---|---|
| VP-1 | A | 1 % |
| VP-2 | B | 1 % |
| | | |
| VP-3 | absorptiver Polarisator ITOS XP38 | |

Für die Polarisationsschichten werden die folgenden Werte T1, T2 und P erhalten (bestimmt bei 550 nm):
T1: Transmission der Polarisatorschicht in Durchlassrichtung
T2: Transmission der Polarisatorschicht in Sperrrichtung
P: Polarisationsgrad, ermittelbar aus der Gleichung:

$$P = (T1-T2)/(T1+T2)$$

| | T1 / % | T2 / % | P / % |
|---|---|---|---|
| EP-1 | 94.1 | 60.9 | 21.5 |
| EP-2 | 86.1 | 22.2 | 58.9 |
| EP-3 | 79.7 | 9.1 | 79.5 |
| EP-4 | 79.1 | 26.3 | 50.2 |
| VP-1 | 63.3 | 0.7 | 97.8 |
| VP-2 | 48.0 | 1.2 | 95.0 |
| VP-3 | 71.5 | 0.1 | 98.6 |

Nach Herstellen und Vermessen einer größeren Zahl von unterschiedlich hergestellten Polarisationsschichten lässt sich ein empirischer Zusammenhang zwischen den Herstellparametern und den erhaltenen Wertepaaren T1 und P feststellen. Im vorliegenden Beispiel lässt sich erkennen, dass mit Erhöhung der Farbstoffkonzentration bei gleicher

LC-Mischung eine Erhöhung von P und eine Verringerung von T1 auftritt. Bei einem Wechsel von Mischung A zu Mischung B (vgl. EP-3 und EP-4) kann bei gleichbleibendem T1 ein deutlich verringerter Wert für P erreicht werden.

Auf die beschriebene Weise können für beliebige gewünschte Wertepaare T1 und P durch Verwendung unterschiedlicher Konzentrationen an Farbstoffmischung und Verwendung von unterschiedlichen LC-Mischungen entsprechende Polarisationsschichten hergestellt werden.

2. Herstellung der Vorrichtungen

Es werden die Vorrichtungen E-1 bis E-4 sowie die Vergleichsvorrichtungen V-1 bis V-3 hergestellt, indem die oben beschriebenen Polarisationsschichten jeweils auf der Ober- und auf der Unterseite einer nematischen Drehzelle angebracht werden. Die nematische Drehzelle enthält Orientierungsschichten sowie eine Schicht aus einem flüssigkristallinen Medium und wird gemäß dem Fachmann allgemein bekannten Verfahren hergestellt.

Für die erhaltenen Vorrichtungen werden jeweils die Transmission im Zustand mit höherer Lichtdurchlässigkeit (Helltransmission) und die Transmission im Zustand mit geringer Lichtdurchlässigkeit (Dunkeltransmission) bestimmt. Aus der Differenz zwischen den beiden Werten ergibt sich der Schalthub. Erneut wurden alle Werte bei 550 nm bestimmt.

| | Helltransmission/% | Dunkeltransmission/% | Schalthub/% |
|---|---|---|---|
| E-1 | 62.8% | 57.3% | 5.5% |
| E-2 | 39.5% | 19.2% | 20.3% |
| E-3 | 32.2% | 7.3% | 24.9% |
| E-4 | 34.8% | 20.8% | 14% |
| V-1 | 20.0% | 0.5% | 19.5% |
| V-2 | 11.5% | 0.6% | 10.3% |
| V-3 | 37.2 | ~0% | 37.2% |

Der Tabelle ist zu entnehmen, dass die erfindungsgemäßen Vorrichtungen alle eine akzeptable Dunkeltransmission aufweisen (ca. 7 % und mehr). Die Werte für die Helltransmission und den Schalthub können unabhängig voneinander eingestellt werden (vgl. z. B. E-3 und E-4). Dies ist für die beabsichtigte Verwendung hoch erwünscht, da so die Vorteile eines hohen Schalthubs und die Vorteile einer hohen Helltransmission gegeneinander abgewogen werden können und die gewünschte Kombination der beiden Werte eingestellt werden kann.

Im Bereich der Parameter P (20-85 %) und T1 (70-100 %), welcher bei den Vorrichtungen E-1 bis E-4 gewählt ist, werden sowohl für die Helltransmission als auch für den Schalthub vorteilhafte Werte erhalten (s. Tabelle oben).

Die Vergleichsvorrichtungen gemäß dem Stand der Technik (V-1 bis V-3), die Werte für die Parameter P und T1 außerhalb dieser Bereiche zeigen, weisen eine für den Gebrauch der Vorrichtungen in Fenstern ungünstig niedrige Dunkeltransmission auf.

In den Fig. 3 bis 8 sind die erhaltenen Transmissionspektren für die Vorrichtungen E-1 bis E-4 sowie V-1 und V-2 im Bereich von 400 bis 900 nm jeweils im Hellzustand (Kurve 1) und im Dunkelzustand (Kurve 2) gezeigt.

Fig. 3 zeigt das Transmissionsspektrum für die erfindungsgemäße Vorrichtung E-1.

Fig. 4 zeigt das Transmissionsspektrum für die erfindungsgemäße Vorrichtung E-2.

Fig. 5 zeigt das Transmissionsspektrum für die erfindungsgemäße Vorrichtung E-3.

Fig. 6 zeigt das Transmissionsspektrum für die erfindungsgemäße Vorrichtung E-4.

Fig. 7 zeigt das Transmissionsspektrum für die Vergleichs-Vorrichtung V-1.

Fig. 8 zeigt das Transmissionsspektrum für die Vergleichs-Vorrichtung V-2.

3. Alternative Herstellungsverfahren für die Polarisationsschichten

Gemäß einem weiteren Beispiel werden die Polarisationsschichten hergestellt, indem zusätzlich zur LC-Mischung und der Farbstoffmischung polymerisationsfähige Monomere hinzugemischt werden. Beispielsweise sind dies

Acrylate wie Monoacrylate, Diacrylate und multifunktionelle Acrylate oder Epoxide oder Vinylether. Es können Mischungen von Monomeren verwendet werden, beispielsweise Mischungen aus Mono-und Diacrylaten oder Mischungen aus Epoxiden und Vinylethern. Die Monomere können mesogene Gruppen aufweisen. Die Mischung enthaltend das flüssigkristalline Medium, den Farbstoff und die Monomere wird anschließend als Schicht vorliegend polymerisiert. Die Polymerisation kann beispielsweise durch Induktion mit UV-Licht erfolgen.

Nach dem oben beschriebenen Verfahren können besonders robuste und temperaturstabile Polarisationsschichten für Vorrichtungen gemäß der vorliegenden Erfindung hergestellt werden.

Gemäß einem weiteren Beispiel (nicht erfindungsgemäß) werden die Polarisationsschichten hergestellt, indem eine Polymerfolie aus Polyvinylalkohol (PVO) verstreckt wird. Anschließend wird Iod in die Folien eingelagert.

Es werden Polarisationsschichten mit unterschiedlichem Verstreckungsgrad der PVA-Folie, unterschiedlicher Iod-Konzentration und unterschiedlicher Dicke hergestellt. Es werden für die erhaltenen Polarisationsschichten die Werte für die Transmission in Durchlassrichtung (T1) und den Polarisationsgrad bestimmt. Nach Herstellung und Vermessung einer größeren Zahl von unterschiedlich hergestellten Polarisationsschichten lässt sich ein empirischer Zusammenhang zwischen den Herstellparametern und den erhaltenen Wertepaaren T1 und P feststellen. Auf diese Weise können für beliebige gewünschte Wertepaare T1 und P entsprechende Polarisationsschichten hergestellt werden.

## Patentansprüche

1. Vorrichtung zur Regulierung des Energie-Durchtritts durch eine lichtdurchlässige Fläche, wobei die Vorrichtung die folgenden Schichten enthält:

   - eine erste Polarisationsschicht,
   - eine zweite Polarisationsschicht, und
   - eine zwischen den beiden Polarisationsschichten angeordnete Schaltschicht, welche die Polarisationseigenschaften von polarisiertem Licht temperaturabhängig ändert,

   **dadurch gekennzeichnet, dass**

   - die beiden Polarisationsschichten gleich oder verschieden einen Polarisationsgrad P im Bereich von 20 - 85 % und eine Transmission in Durchlassrichtung T1 im Bereich von 70 - 100 %, bestimmt bei einer Wellenlänge von 550 nm, aufweisen, und
   - eine oder beide der Polarisationsschichten aus einer Schicht enthaltend ein flüssigkristallines Medium sowie einen oder mehrere dichroitische Farbstoffe gebildet sind.

2. Vorrichtung nach Anspruch 1, **dadurch gekennzeichnet, dass** der Energie-Durchtritt in einen Innenraum hinein erfolgt, welcher bevorzugt gewählt ist aus Innenräumen eines Gebäudes, eines Fahrzeugs oder eines Transportbehälters.

3. Vorrichtung nach Anspruch 1 oder 2, **dadurch gekennzeichnet, dass** sie temperaturabhängig von einem Schaltzustand mit höherer Lichtdurchlässigkeit zu einem Schaltzustand mit geringerer Lichtdurchlässigkeit schaltet.

4. Vorrichtung nach einem oder mehreren der Ansprüche 1 bis 3,
   **dadurch gekennzeichnet, dass** das Schalten vom Schaltzustand mit höherer Lichtdurchlässigkeit zum Schaltzustand mit geringerer Lichtdurchlässigkeit graduell in einem Temperaturbereich von 0 °C bis 80 °C stattfindet.

5. Vorrichtung nach einem oder mehreren der Ansprüche 1 bis 4,
   **dadurch gekennzeichnet, dass** die beiden Polarisationsschichten gleich oder verschieden einen Polarisationsgrad P im Bereich von 30 % - 85 % und eine Transmission in Durchlassrichtung T1 im Bereich von 75 % - 100 %, bestimmt bei einer Wellenlänge von 550 nm, aufweisen.

6. Vorrichtung nach einem oder mehreren der Ansprüche 1 bis 5,
   **dadurch gekennzeichnet, dass** die beiden Polarisationsschichten Linearpolarisatoren darstellen, deren Polarisationsebenen um einen Winkel von 70° bis 110° gegeneinander gedreht sind.

7. Vorrichtung nach einem oder mehreren der Ansprüche 1 bis 6,
   **dadurch gekennzeichnet, dass** eine oder beide der Polarisationsschichten aus einer Schicht enthaltend ein orientiertes Polymer gebildet sind.

8. Vorrichtung nach einem oder mehreren der Ansprüche 1 bis 7,
**dadurch gekennzeichnet, dass** die Schaltschicht ein flüssigkristallines Medium enthält, welches beim Schaltvorgang mit steigender Temperatur von einem nematischen zu einem isotropen Zustand wechselt.

9. Vorrichtung nach einem oder mehreren der Ansprüche 1 bis 8,
**dadurch gekennzeichnet, dass** die Schaltschicht im optisch anisotropen Zustand die Polarisationsebene von linear polarisiertem Licht um einen Winkel von 10° oder mehr dreht, und im isotropen Zustand die Polarisationsebene von linear polarisiertem Licht nicht oder nur in vernachlässigbarem Umfang dreht.

10. Vorrichtung nach einem oder mehreren der Ansprüche 1 bis 9,
**dadurch gekennzeichnet, dass** sie zusätzlich eine Substratschicht umfasst, welche aus Glas, einem Polymer oder ITO gebildet ist.

11. Verfahren zur Herstellung einer Vorrichtung gemäß einem oder mehreren der Ansprüche 1 bis 10,
**dadurch gekennzeichnet, dass** die beiden Parameter Polarisationsgrad P und Transmission in Durchlassrichtung T1 für die Polarisationsschichten unabhängig voneinander ausgewählt werden durch Variation eines oder mehrerer Herstellparameter gewählt aus Schichtdicke, Orientierungsgrad der Polarisationsschicht, Konzentration von eingelagerter Substanz, Orientierungsgrad der eingelagerten Substanz, Absorptionseigenschaften der eingelagerten Substanz, Struktur der eingelagerten Substanz, Dichroismus der eingelagerten Substanz und Aggregationseigenschaften der eingelagerten Substanz.

12. Verfahren nach Anspruch 11, **dadurch gekennzeichnet, dass** der Polarisationsgrad P ausgewählt ist aus dem Bereich von 20 - 85 % und die Transmission in Durchlassrichtung ausgewählt ist aus dem Bereich von 70 - 100 %.

13. Verwendung der Vorrichtung nach einem oder mehreren der Ansprüche 1 bis 10 zur temperaturabhängigen Beeinflussung des Energie-Durchtritts durch eine lichtdurchlässige Fläche.

14. Verwendung nach Anspruch 13, **dadurch gekennzeichnet, dass** die Vorrichtung ohne Anlegen von elektrischer Spannung von einem Zustand mit höherer Lichttransmission zu einem Zustand mit geringerer Lichttransmission schaltet.

## Claims

1. Device for regulating the passage of energy through a light-transmitting area, where the device comprises the following layers:

   - a first polarisation layer,
   - a second polarisation layer, and
   - a switching layer, arranged between the two polarisation layers, which changes the polarisation properties of polarised light as a function of temperature,

   **characterised in that**

   - the two polarisation layers, identically or differently, have a degree of polarisation P in the range 20 - 85% and a transmission in the transmission direction T1 in the range 70 - 100%, determined at a wavelength of 550 nm, and
   - one or both of the polarisation layers are formed from a layer comprising a liquid-crystalline medium and one or more dichroic dyes.

2. Device according to Claim 1, **characterised in that** the passage of energy takes place into an interior space which is preferably selected from interior spaces of a building, a vehicle or a transport container.

3. Device according to Claim 1 or 2, **characterised in that** it switches from a switching state having relatively high light transmission to a switching state having relatively low light transmission as a function of temperature.

4. Device according to one or more of Claims 1 to 3, **characterised in that** the switching from the switching state having relatively high light transmission to the switching state having relatively low light transmission takes place gradually in a temperature range from 0°C to 80°C.

5. Device according to one or more of Claims 1 to 4, **characterised in that** the two polarisation layers, identically or differently, have a degree of polarisation P in the range 30% - 85% and a transmission in the transmission direction T1 in the range 75% - 100%, determined at a wavelength of 550 nm.

6. Device according to one or more of Claims 1 to 5, **characterised in that** the two polarisation layers are linear polarisers whose planes of polarisation are rotated by an angle of 70° to 110° with respect to one another.

7. Device according to one or more of Claims 1 to 6, **characterised in that** one or both of the polarisation layers are formed from a layer comprising an oriented polymer.

8. Device according to one or more of Claims 1 to 7, **characterised in that** the switching layer comprises a liquid-crystalline medium which changes from a nematic state to an isotropic state during the switching operation with increasing temperature.

9. Device according to one or more of Claims 1 to 8, **characterised in that** the switching layer in the optically anisotropic state rotates the plane of polarisation of linear-polarised light by an angle of 10° or more, and in the isotropic state does not rotate the plane of polarisation of linear-polarised light or only does so to a negligible extent.

10. Device according to one or more of Claims 1 to 9, **characterised in that** it additionally comprises a substrate layer which is formed from glass, a polymer or ITO.

11. Process for the production of a device according to one or more of Claims 1 to 10,
**characterised in that** the two parameters degree of polarisation P and transmission in the transmission direction T1 for the polarisation layers are selected, independently of one another, by variation of one or more production parameters selected from layer thickness, degree of orientation of the polarisation layer, concentration of incorporated substance, degree of alignment of the incorporated substance, absorption properties of the incorporated substance, structure of the incorporated substance, dichroism of the incorporated substance and aggregation properties of the incorporated substance.

12. Process according to Claim 11, **characterised in that** the degree of polarisation P is selected from the range 20 - 85% and the transmission in the transmission direction is selected from the range 70 - 100%.

13. Use of the device according to one or more of Claims 1 to 10 for influencing the passage of energy through a light-transmitting area as a function of temperature.

14. Use according to Claim 13, **characterised in that** the device switches from a state having relatively high light transmission to a state having relatively low light transmission without application of an electrical voltage.

## Revendications

1. Dispositif pour réguler le passage d'énergie au travers d'une zone de transmission de lumière, dans lequel le dispositif comprend les couches qui suivent :

   - une première couche de polarisation,
   - une seconde couche de polarisation, et
   - une couche de commutation, agencée entre les deux couches de polarisation, laquelle couche modifie les propriétés de polarisation de la lumière polarisée en fonction de la température,

   **caractérisé en ce que** :

   - les deux couches de polarisation, de manière identique ou différente, présentent un degré de polarisation P dans la plage 20 - 85% et une transmission dans la direction de transmission T1 dans la plage 70 - 100%, déterminés à une longueur d'onde de 550 nm, et
   - l'une des couches de polarisation ou les deux est/sont formée(s) à partir d'une couche comprenant un milieu cristallin liquide et un ou plusieurs colorant(s) dichroïque(s).

2. Dispositif selon la revendication 1, **caractérisé en ce que** le passage d'énergie s'effectue à l'intérieur d'un espace

intérieur qui est de façon préférable sélectionné parmi des espaces intérieurs d'un immeuble, d'un véhicule ou d'un conteneur de transport.

**3.** Dispositif selon la revendication 1 ou 2, **caractérisé en ce qu'**il réalise une commutation depuis un état de commutation présentant une transmission de lumière relativement élevée jusqu'à un état de commutation présentant une transmission de lumière relativement faible en fonction de la température.

**4.** Dispositif selon une ou plusieurs des revendications 1 à 3, **caractérisé en ce que** la commutation depuis l'état de commutation présentant la transmission de lumière relativement élevée jusqu'à l'état de commutation présentant la transmission de lumière relativement faible est réalisée de façon progressive dans une plage de températures qui va de 0°C à 80°C.

**5.** Dispositif selon une ou plusieurs des revendications 1 à 4, **caractérisé en ce que** les deux couches de polarisation, de manière identique ou différente, présentent un degré de polarisation P dans la plage 30% - 85% et une transmission dans la direction de transmission T1 dans la plage 75% - 100%, déterminés à une longueur d'onde de 550 nm.

**6.** Dispositif selon une ou plusieurs des revendications 1 à 5, **caractérisé en ce que** les deux couches de polarisation sont des polariseurs linéaires dont des plans de polarisation sont tournés l'un par rapport à l'autre d'un angle de 70° à 110°.

**7.** Dispositif selon une ou plusieurs des revendications 1 à 6, **caractérisé en ce que** l'une des couches de polarisation ou les deux est/sont formée(s) à partir d'une couche comprenant un polymère orienté.

**8.** Dispositif selon une ou plusieurs des revendications 1 à 7, **caractérisé en ce que** la couche de commutation comprend un milieu cristallin liquide qui passe d'un état nématique à un état isotrope pendant l'opération de commutation lorsque la température augmente.

**9.** Dispositif selon une ou plusieurs des revendications 1 à 8, **caractérisé en ce que** la couche de commutation dans l'état optiquement anisotrope fait tourner le plan de polarisation de la lumière polarisée linéairement d'un angle de 10° ou plus, et **en ce que** l'état isotrope ne fait pas tourner le plan de polarisation de la lumière polarisée linéairement ou le fait seulement tourner selon un degré négligeable.

**10.** Dispositif selon une ou plusieurs des revendications 1 à 9, **caractérisé en ce qu'**il comprend de façon additionnelle une couche de substrat qui est formée à partir de verre, d'un polymère ou d'oxyde d'indium et d'étain (ITO).

**11.** Procédé pour la fabrication d'un dispositif selon une ou plusieurs des revendications 1 à 10,
**caractérisé en ce que** les deux paramètres degré de polarisation P et transmission dans la direction de transmission T1 pour les couches de polarisation sont sélectionnés, indépendamment l'un de l'autre, au moyen de la variation d'un ou de plusieurs paramètre(s) de fabrication sélectionné(s) parmi l'épaisseur de couche, le degré d'orientation de la couche de polarisation, la concentration de substance incorporée, le degré d'alignement de la substance incorporée, les propriétés d'absorption de la substance incorporée, la structure de la substance incorporée, le dichroïsme de la substance incorporée et les propriétés d'agrégation de la substance incorporée.

**12.** Procédé selon la revendication 11, **caractérisé en ce que** le degré de polarisation P est sélectionné parmi la plage 20 - 85% et la transmission dans la direction de transmission est sélectionnée parmi la plage 70 -100%.

**13.** Utilisation du dispositif selon une ou plusieurs des revendications 1 à 10 pour influencer le passage d'énergie au travers d'une zone de transmission de lumière en fonction de la température.

**14.** Utilisation selon la revendication 13, **caractérisée en ce que** le dispositif réalise une commutation depuis un état présentant une transmission de lumière relativement élevée jusqu'à un état présentant une transmission de lumière relativement faible sans application d'une tension électrique.

Fig. 1

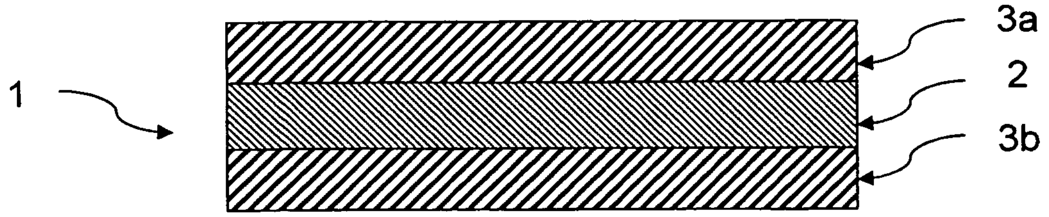


Fig. 2

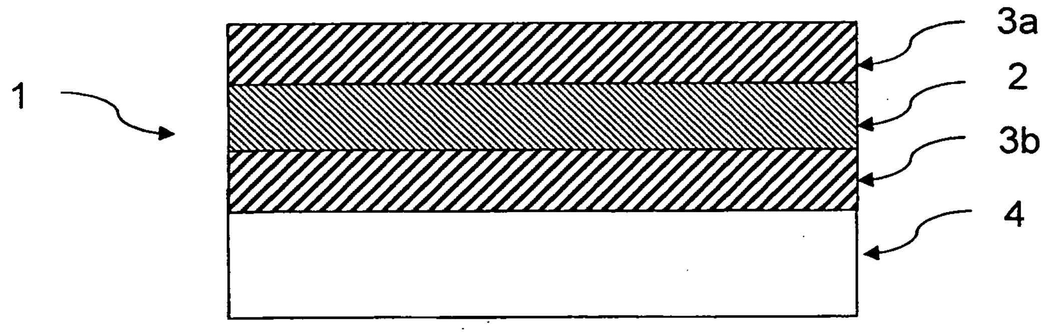

Fig. 3

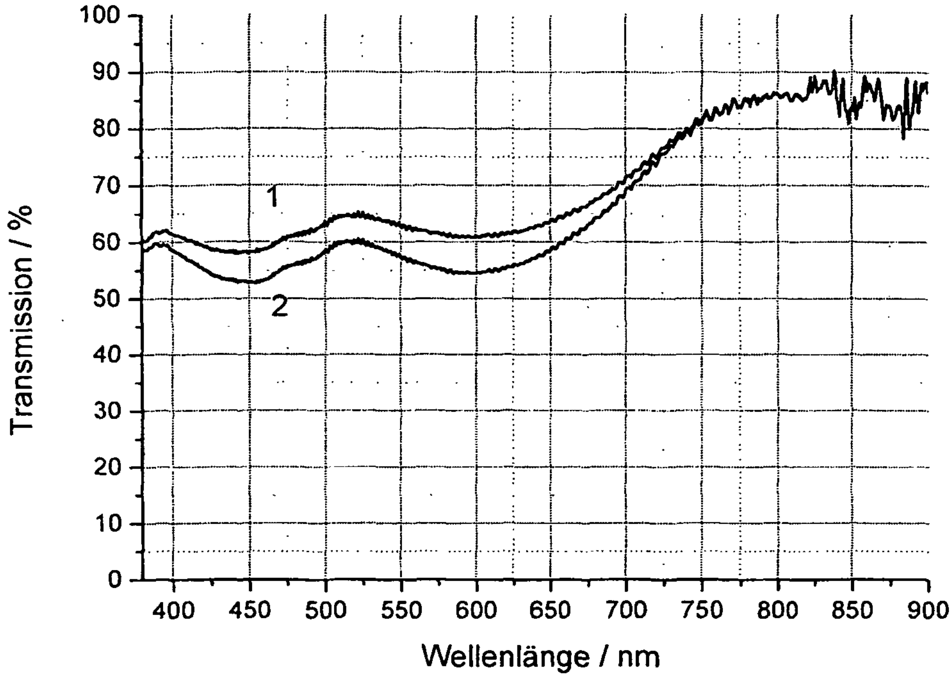
100
90
80
70
60
50
40
30
20
10
0
Transmission / %
1
2
400 450 500 550 600 650 700 750 800 850 900
Wellenlänge / nm

Fig. 4

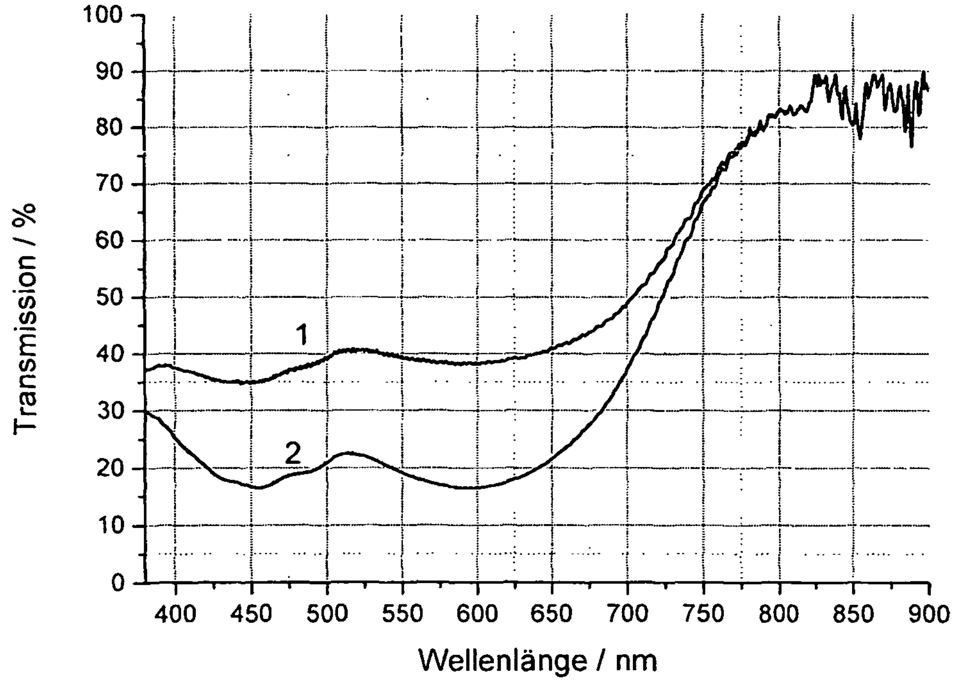
100
90
80
70
60
50
40
30
20
10
0
Transmission / %
1
2
400 450 500 550 600 650 700 750 800 850 900
Wellenlänge / nm

Fig. 5

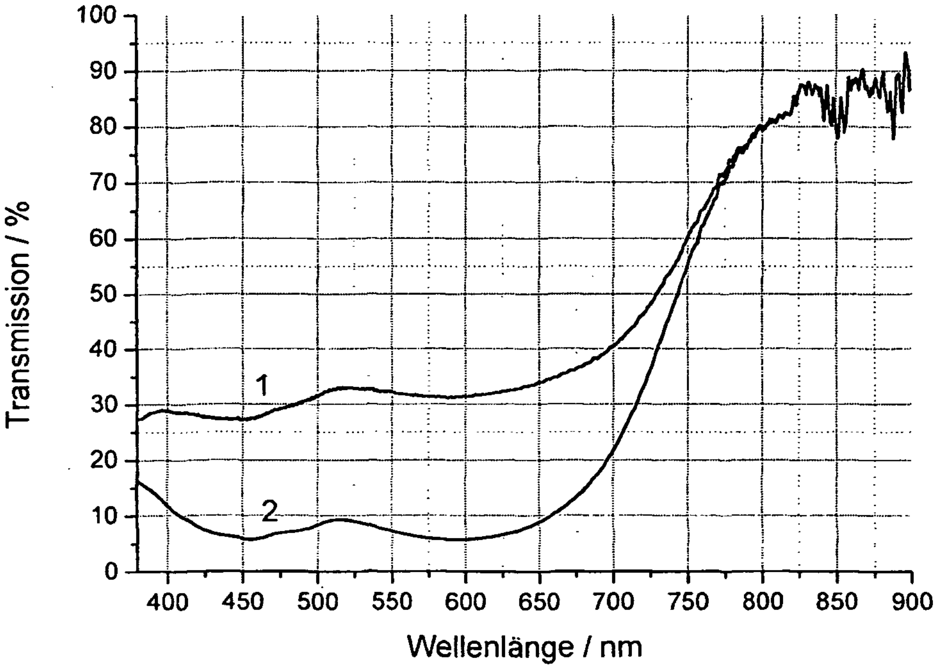
100
90
80
70
60
50
40
30
20
10
0
Transmission / %
1
2
400
450
500
550
600
650
700
750
800
850
900
Wellenlänge / nm

Fig. 6

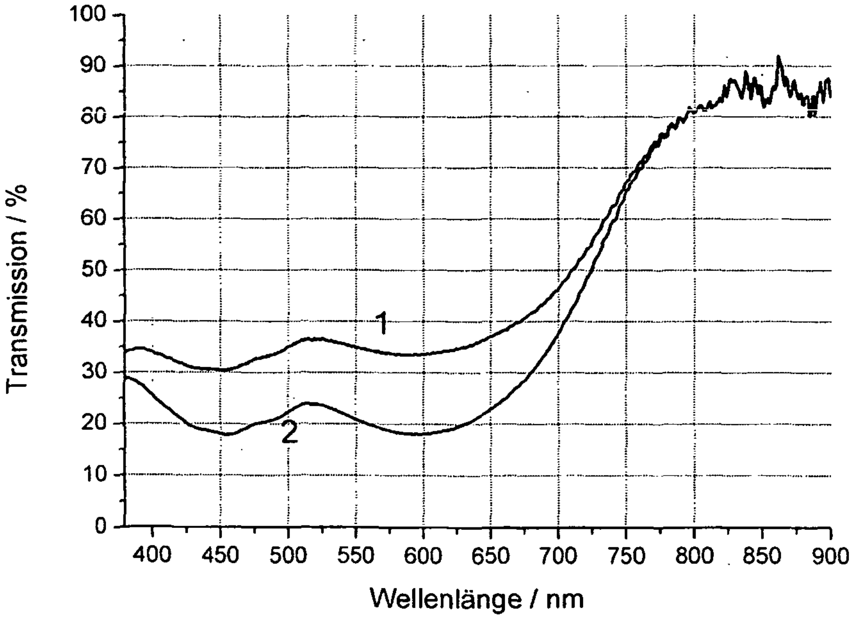
100
90
80
70
60
50
40
30
20
10
0
Transmission / %
1
2
400
450
500
550
600
650
700
750
800
850
900
Wellenlänge / nm

Fig. 7

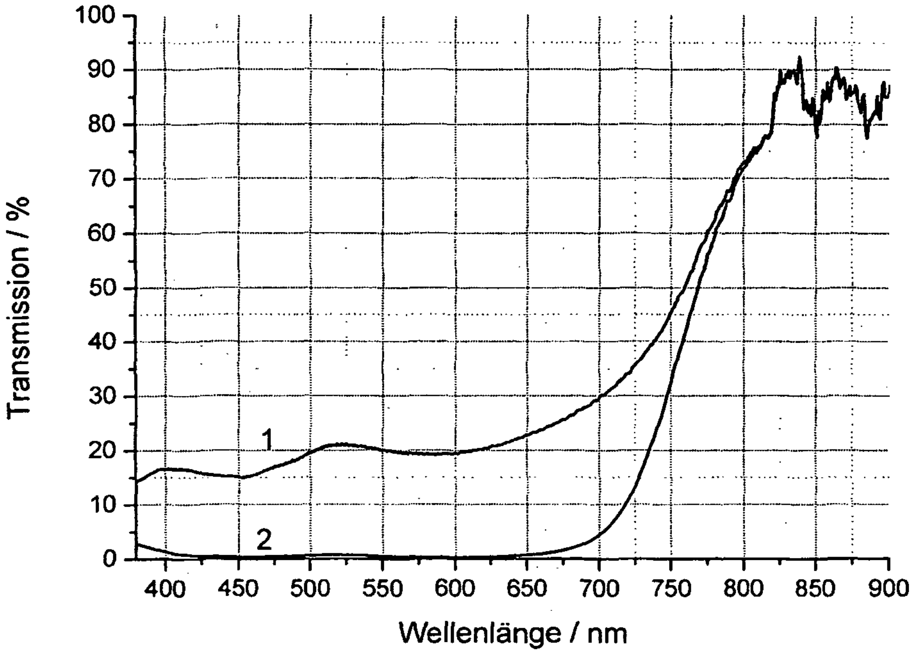
Transmission / %
100
90
80
70
60
50
40
30
20
10
0
1
2
400
450
500
550
600
650
700
750
800
850
900
Wellenlänge / nm

Fig. 8

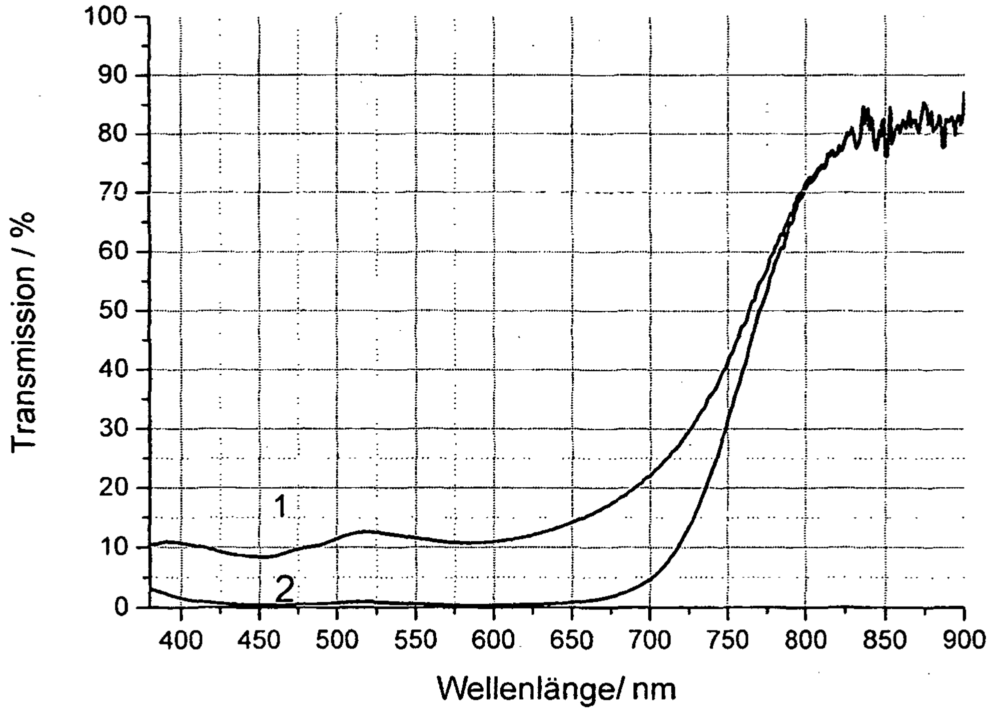
Transmission / %
100
90
80
70
60
50
40
30
20
10
0
1
2
400
450
500
550
600
650
700
750
800
850
900
Wellenlänge/ nm

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20090015902 A
- US 20090167971 A
- US 20110102878 A
- US 2009167971 A1
- EP 452460 A
- EP 313053 A
- EP 359146 A
- WO 2011134582 A
- WO 2011144299 A
- WO 2011154077 A
- EP 10008779 A
- EP 10013797 A
- EP 11008518 A

### In der Beschreibung aufgeführte Nicht-Patentliteratur

- Liquid Crystals, Applications and Uses. World Scientific Publishing, 1992, 73-81